# EUROPÄISCHE PATENTSCHRIFT

(11) **EP 0 749 892 B1**
(45) Veröffentlichungstag und Bekanntmachung des Hinweises auf die Patenterteilung: **24.06.1998**
(21) Anmeldenummer: 96105387.3
(22) Anmeldetag: 04.04.1996
(51) Int. Cl.: B62D 27/02, B62D 23/00, B62D 29/00, B21D 39/04

(54) **Träger einer Aufbaustruktur eines Fahrzeuges und Verfahren zu dessen Herstellung**
Beam for a vehicle frame and its method of manufacturing
Poutre pour un chassis d'un véhicule et sa méthode de fabrication

(30) Priorität: 26.05.1995 DE 19519353
(43) Veröffentlichungstag der Anmeldung: 27.12.1996
(73) Patentinhaber: Dr.Ing.h.c. F. Porsche Aktiengesellschaft, 70435 Stuttgart (DE)
(72) Erfinder: Vlahovic, Josip, 74321 Bietigheim-Bissingen (DE)

(56) Entgegenhaltungen:
- EP-A- 0 167 978
- EP-A- 0 494 116
- WO-A-90/02680
- WO-A-94/04766
- DE-A- 4 214 557
- FR-A- 2 345 243
- GB-A- 928 912
- US-A- 5 213 386

## Beschreibung

Die Erfindung betrifft einen Träger einer Aufbaustruktur eines Fahrzeuges und ein Verfahren zu dessen Herstellung gemäß dem Oberbegriff des Patentanspruches 1.

Ein Träger der eingangs genannten Gattung geht aus der DE 42 14 557 C2 hervor. Diese beschreibt ein Hohlprofil, hergestellt durch hydraulisches Aufweiten, eines vorprofilierten Ausgangsteiles (Rohling). Derartige Träger finden Verwendung im Kraftfahrzeug-Karosseriebau, beispielsweise bei Türrahmen, Säulen oder dgl.

Bei Trägern, die eine relativ große Längserstreckung aufweisen, sich beispielsweise entlang einer A-Säule und eines nachfolgenden seitlichen Dachrahmens erstrecken, besteht die Problematik, daß Teilbereiche der Träger relativ hochbelastet sind, wogegen andere Teilbereiche eine geringere Belastung aufweisen. Bei einstückiger Ausbildung des Trägers muß dieser dann so konzipiert sein, daß er den größten auftretenden Belastungen standhält. Zwangsläufig sind deshalb Teilbereiche des Trägers überdimensioniert und erhöhen das Gewicht des Trägers in unnötiger Weise.

Die WO-A-90/02680 behandelt eine Aufbaustruktur eines Fahrzeuges, wobei Träger der Aufbaustruktur durch jeweils zumindest zwei formschlüssig miteinander verbundene Hohlprofile gebildet werden. Die Hohlprofile werden durch Kleben, Nieten, Schweißen oder dergleichen miteinander verbunden.

Aufgabe der Erfindung ist es, an einem Träger einer Aufbaustruktur solche Vorkehrungen zu treffen, daß der Träger an die jeweils auftretenden Belastungen angepaßt ist.

Erfindungsgemäß wird diese Aufgabe durch die Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der Träger zumindest über einen Teilbereich seiner Längserstreckung aus wenigstens zwei formschlüssig miteinander verbundenen, hydraulisch aufgeweiteten Hohlprofilen zusammengesetzt ist. Dadurch wird erreicht, daß der Träger in hochbelasteten Bereichen die auftretenden Belastungen sicher aufnehmen kann, wogegen in niedriger belasteten Bereichen lediglich ein Hohlprofil weitergeführt ist, das den dort auftretenden Belastungen standhält. Hierdurch wird eine optimale Anpassung hinsichtlich Festigkeit und Gewicht erzielt.

Durch die formschlüssige Verbindung zwischen den Hohlprofilen wird eine einfache kostengünstige Verbindungstechnik geschaffen. Die Hohlprofile können aus Stahl oder Leichtmetall gefertigt sein. Bei Bedarf kann eine zusätzliche örtliche Verbindung durch Kleben oder Schweißen zwischen den Hohlprofilen erfolgen. Die Aufnahme an einem Hohlprofil ist vorzugsweise mit einem Hinterschnitt versehen. Die Hohlprofile sind durch das Innenhochdruck-Umformen in einfacher Weise und kostengünstig herstellbar.

Ausführungsbeispiele der Erfindung sind in den Zeichnungen dargestellt und werden im folgenden näher beschrieben.
Es zeigt
- Fig. 1: eine perspektivische Teilansicht von schräg vorne auf eine Aufbaustruktur eines Fahrzeuges,
- Fig. 2: einen Schnitt nach der Linie II-II der Fig. 1 durch den Schweller des Fahrzeuges in größerem Maßstab gemäß einer ersten Ausführungsform,
- Fig. 3: einen Schnitt nach der Linie III der Fig. 1 durch den Schweller des Fahrzeuges in größerem Maßstab gemäß einer zweiten Ausführungsform,
- Fig. 4: einen Schnitt nach der Linie IV-IV der Fig. 1 durch die A-Säule des Fahrzeuges in größerem Maßstab gemäß einer ersten Ausführungsform,
- Fig. 5: einen Schnitt entsprechend Fig. 4 einer weiteren Ausführungsform der A-Säule,
- Fig. 6: eine perspektivische Teilansicht von schräg vorne auf eine A-Säule der Aufbaustruktur mit angrenzenden Trägern,
- Fig. 7: eine Ansicht ähnlich Fig. 6 einer weiteren Ausführungsform der A-Säule,
- Fig. 8: eine weitere Ansicht ähnlich Fig. 6 einer zusätzlichen Ausführungsform der A-Säule.

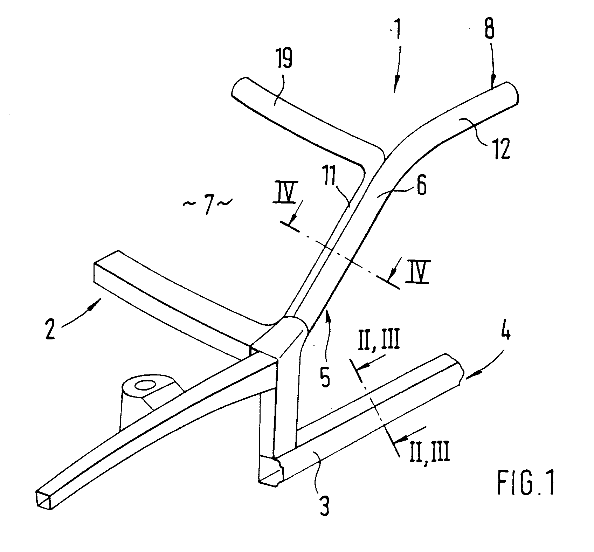

Fig. 1 zeigt einen Teilbereich eines Fahrzeuges 1, insbesondere eines Personenkraftwagens, mit einer in Space Frame-Bauweise gefertigten Aufbaustruktur 2, die sich aus einer Vielzahl von miteinander verbundenen Trägern zusammensetzt.

Im Ausführungsbeispiel wird lediglich auf einen durch einen Schweller 3 gebildeten Träger 4 und einen als A-Säule 5 ausgebildeten Träger 6 eingegangen. Die A-Säule 5 erstreckt sich entlang eines seitlichen Randes einer Windschutzscheibe 7 sowie eines seitlichen Dachrahmens 8 der Aufbaustruktur 2.

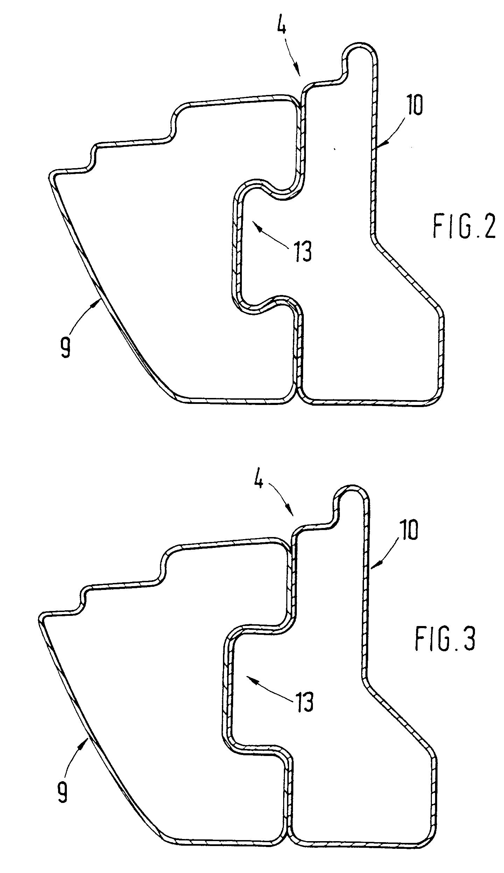

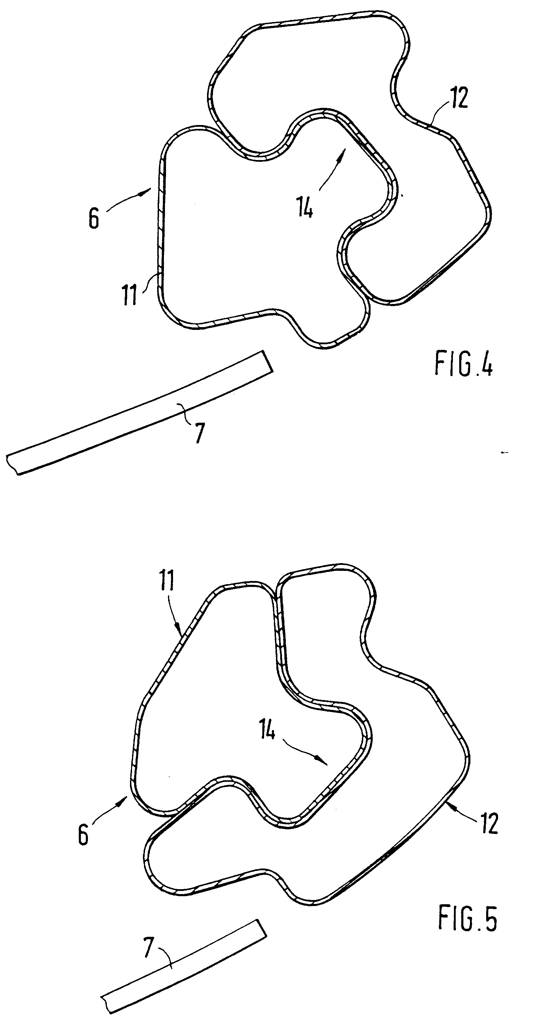

Erfindungsgemäß ist vorgesehen, daß sich die Träger 4, 6 zumindest über einen Teilbereich ihrer Längserstreckung aus wenigstens zwei formschlüssig miteinander verbundenen hydraulisch aufgeweiteten, parallel zueinander verlaufenden Hohlprofilen 9, 10 bzw. 11, 12 zusammensetzen. In hochbelasteten Bereichen besteht der Träger 4, 6 also aus wenigstens zwei formschlüssig miteinander verbundenen Hohlprofilen 9, 10 bzw.11, 12, wogegen in niedriger belasteten Bereichen lediglich eines der beiden Hohlprofile weitergeführt ist Fig. 2 bis 5).

In einem gemeinsamen Verbindungsbereich von zwei angrenzenden Hohlprofilen 9, 10 bzw. 11, 12 ist an einem Hohlprofil z. B. 9, 10 eine Aufnahme 13, 14 ausgebildet, in die das andere Hohlprofil 10, 11 zumindest abschnittsweise formschlüssig eingesetzt ist.

Gemäß den Fig. 2 bis 5 wird die Aufnahme 13, 14 durch eine rinnenförmige Einprägung gebildet, die vorzugsweise benachbart einer Einführöffnung mit einem Hinterschnitt versehen ist. Entsprechend Fig. 3 weist die Aufnahme 13 keinen Hinterschnitt auf.

Die formschlüssig miteinander zusammenwirkenden Hohlprofile 9, 10 bzw. 11, 12 können zusätzlich örtlich durch Schweißen, Kleben oder dergleichen miteinander verbunden sein.

Die Herstellung eines derartigen Trägers 4, 6 erfolgt folgendermaßen: Zuerst wird ein erstes rohrförmiges oder vorprofiliertes Ausgangsteil in ein mehrteiliges Werkzeug eingelegt und danach durch Innenhochdruck-Umformen hydraulisch aufgeweitet, wodurch das fertige erste Hohlprofil 9, 12 geschaffen wird. Bei diesem Aufweitvorgang wird am ersten Hohlprofil 9, 12 die rinnenförmige Aufnahme 13, 14 geschaffen. Nach Beendigung des ersten Aufblasvorganges wird das Werkzeugoberteil des Werkzeuges abgenommen und ein zweites rohrförmiges oder vorprofiliertes Ausgangsteil in die Aufnahme 13, 14 des ersten Hohlprofils 9, 12 eingesetzt. Die Flüssigkeit zum Aufblasen des ersten Hohlprofiles 9, 12 befindet sich noch in diesem, wobei der Flüssigkeitsdruck steuerbar ist.

Nun wird ein neues Oberteil auf das vorhandene Unterteil aufgesetzt und das zweite Ausgangsteil hydraulisch aufgeweitet. Durch diesen Aufblasvorgang legt sich zumindest ein Teilbereich des Umfanges des zweiten Ausgangsteiles formschlüssig an die angrenzende Wandung der Aufnahme 13, 14, wodurch eine sichere Verbindung zwischen beiden Hohlprofilen 9, 10 geschaffen wird. Das erste Hohlprofil 9 weist vorzugsweise eine größere Wanddicke auf als das zweite Hohlprofil.

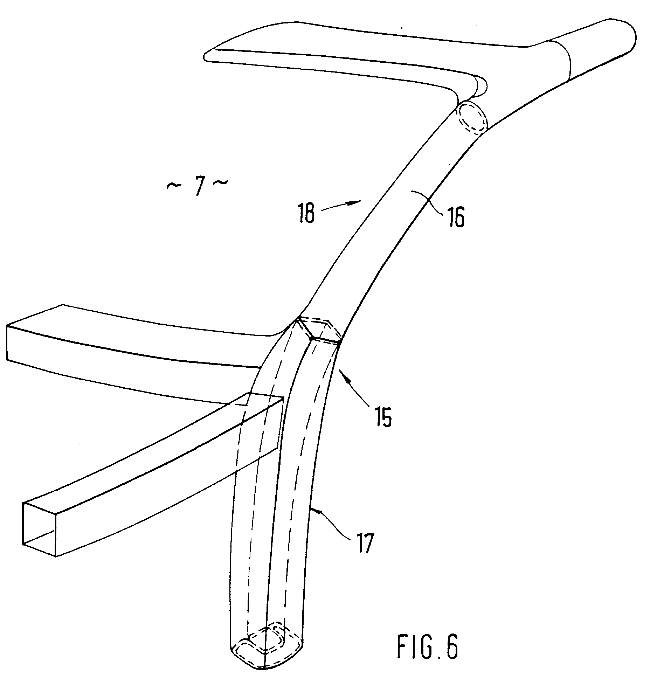

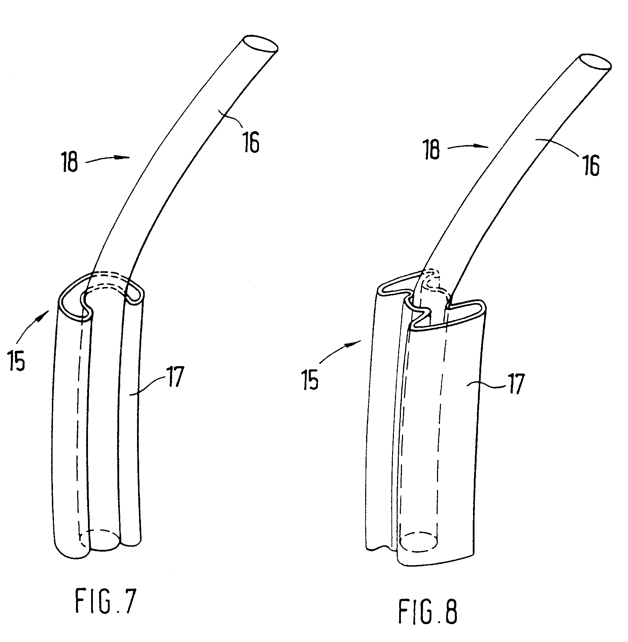

Die Fig. 6 bis 8 zeigen eine abschnittsweise aus zwei ineinandergesetzten Hohlprofilen 16, 17 bestehende A-Säule 15, wogegen in einem oberen Teilbereich 18 der Längserstreckung nur das Hohlprofil 16 weitergeführt ist.

Die hydraulisch aufgeweiteten Träger können aus Stahl oder Leichtmetall gefertigt sein.

Gemäß Fig. 1 setzt sich die A-Säule 5 aus den zwei Hohlprofilen 11, 12 zusammen, wobei das Hohlprofil 12 entlang des seitlichen Dachrahmens 8 weitergerführt ist. Das andere Hohlprofil 11 ist an seinem oberen Ende nach innen umgebogen und bildet einen querverlaufenden oberen Träger 19 des Windschutzscheibenrahmens.

## Patentansprüche

1. Träger einer Aufbaustruktur eines Fahrzeuges, der durch hydraulisches Aufweiten (Innenhochdruck-Umformen) gebildet wird, dadurch gekennzeichnet, daß sich der Träger (4, 6, 15) zumindest über einen Teilbereich seiner Längserstreckung aus wenigstens zwei formschlüssig miteinander verbundenen hydraulisch aufgeweiteten, parallel zueinander verlaufenden Hohlprofilen (9, 10 bzw. 11, 12 bzw. 16, 17) zusammensetzt, wobei in einem gemeinsamen Verbindungsbereich von zwei angrenzenden Hohlprofilen (9, 10 bzw. 11, 12, bzw. 16, 17) an einem Hohlprofil (z.B. 9) eine Aufnahme (13, 14) ausgebildet ist, in die das andere Hohlprofil durch hydraulisches Aufweiten formschlüssig eingesetzt ist.

2. Träger nach Anspruch 1, daß sich der Träger (4, 6, 15) in hochbelasteten Bereichen aus zwei formschlüssig miteinander verbundenen Hohlprofilen (9, 10 bzw. 11, 12 bzw. 16, 17) zusammensetzt, wogegen in niedriger belasteten Bereichen lediglich eines der beiden Hohlprofile (z.B. 12, 16) weitergeführt ist.

3. Träger nach Anspruch 1, dadurch gekennzeichnet, daß die Aufnahme (13, 14) mit einem Hinterschnitt versehen ist.

4. Träger nach den Ansprüchen 1 und 2, dadurch gekennzeichnet, daß beide Hohlprofile (9, 10 bzw. 11, 12 bzw. 16, 17) örtlich durch Schweißen, Kleben oder dergleichen zusätzlich miteinander verbunden sind.

5. Träger nach den Ansprüchen 1 bis 4, dadurch gekennzeichnet, daß das erste Hohlprofil (9, 12) eine größere Wanddicke aufweist als das zweite Hohlprofil (10, 11).

6. Verfahren zur Herstellung eines Trägers einer Aufbaustruktur nach Anspruch 1, dadurch gekennzeichnet, daß ein erstes rohrförmiges oder vorprofiliertes Ausgangsteil in ein Werkzeug eingelegt und danach hydraulisch zum ersten Hohlprofil (9i, 12, 15) aufgeweitet wird, wobei beim Aufweiten die Aufnahme (13, 14) am ersten Hohlprofil (9, 12, 15) gebildet wird, daß danach ein zweites rohrförmiges Ausgangsteil in die Aufnahme (13, 14) des ersten Hohlprofils (9, 12, 15) eingesetzt wird und daß in einem weiteren Schritt das zweite Hohlprofil (10, 11, 16) durch hydraulisches Aufweiten des zweiten Ausgangsteiles hergestellt wird, wobei beim Aufweiten ein Formschluß zwischen beiden Hohlprofilen (9, 10, 11 bzw. 12, 15, 16) erzeugt wird.

## Claims

1. A beam of a body structure of a vehicle, formed by hydraulic expansion (internal high-pressure shaping), **characterized in that** the beam (4, 6, 15) is formed over at least a partial area of its longitudinal extension by at least two hydraulically expanded hollow sections (9, 10 or 11, 12 or 16, 17 respectively) joined to each other with positive locking and extending parallel to each other, wherein a receiving means (13, 14) is formed on a hollow section (for example 9) by two adjacent hollow sections (9, 10, or 11, 12 or 16, 17 respectively) in a common join area, the other hollow section being inserted with positive locking into the said receiving means (13, 14) by hydraulic expansion.

2. A beam according to Claim 1, **characterized in that** the beam (4, 6, 15) is formed in areas of high stress by two hollow sections (9, 10 or 11, 12 or 16, 17 respectively) connected together with positive locking, whereas only one of the two hollow sections (for example 12, 16) is continued in areas of lower stress.

3. A beam according to Claim 1, **characterized in that** the receiving means (13, 14) is provided with an undercut.

4. A beam according to Claims 1 and 2, **characterized in that** the two hollow sections (9, 10 or 11, 12 or 16, 17 respectively) are additionally joined to each other locally by welding, adhesion or the like.

5. A beam according to Claims 1 to 4, **characterized in that** the first hollow section (9, 12) has a greater wall thickness than the second hollow section (10, 11).

6. A method of producing a beam of a body structure according to Claim 1, **characterized in that** a first tubular or pre-profiled starting part is inserted into a tool and is then expanded hydraulically to form the first hollow section (9, 12, 15), wherein the receiving means (13, 14) is formed on the first hollow section (9, 12, 15) during the expansion, a second tubular starting part is then inserted into the receiving means (13, 14) of the first hollow section (9, 12, 15), and in a further step the second hollow section (10, 11, 16) is produced by hydraulic expansion of the second starting part, wherein positive locking is produced between the two hollow sections (9, 10, 11 or 12, 15, 16 respectively) during expansion.

## Revendications

1. Poutre pour châssis de véhicule, constituée par élargissement hydraulique (formage sous haute pression intérieure), caractérisée en ce que la poutre (4, 6, 15) est constituée sur au moins une zone partielle de son étendue d'au moins deux profilés creux (9, 10 ou 16, 17) s'étendant Parallèlement les uns aux autres, élargis hydrauliquement, reliés ensemble avec ajustement de forme, un logement (13, 14) dans lequel l'autre profilé creux est inséré avec ajustement de forme par une opération d'élargissement hydraulique, étant constitué dans une zone de liaison commune de deux profilés (9, 10 ou 11, 12, ou 16, 17) limitrophes sur un profilé creux (par exemple, 9).

2. Poutre selon la revendication 1, caractérisée en ce que le support (4, 5, 15) est constitué dans les zones fortement chargées de deux profilés creux (9, 10; 11, 12, ou 16, 17) reliés ensemble avec ajustement de forme alors que, par contre, dans les zones à faible charge, seul l'un des deux profilés creux (par exemple 12, 16) est prolongé.

3. Poutre selon la revendication 1, caractérisée en ce que le logement (13, 14) est pourvu d'une contre-dépouille.

4. Poutre selon les revendications 1 et 2, caractérisée en ce que les deux profilés creux (9, 10; 11, 12, ou 16, 17) sont reliés ensemble localement à titre supplémentaire, par soudage, collage ou analogue.

5. Poutre selon les revendications 1 à 4, caractérisée en ce que le premier profité creux (9, 12) a une épaisseur de paroi supérieure à celle du deuxième profité creux (10, 11).

6. Procédé de fabrication d'une poutre pour un châssis selon la revendication 1, caractérisé en ce qu'une première partie initiale tubulaire ou pré-profilée est placée dans un outil et est ensuite élargie hydrauliquement pour constituer le premier profité creux (9i, 12, 15), le logement (13, 14) sur le premier profilé creux (9, 12, 15) étant constitué lors de l'élargissement, en ce qu'ensuite une deuxième partie initiale tubulaire est insérée dans le logement (13, 14) du premier profilé creux (9, 12, 15), et en ce que, lors d'une étape supplémentaire, le deuxième profilé creux (10, 11, 16) est constitué par élargissement hydraulique de la deuxième partie initiale, un ajustement de forme étant généré entre les deux profilés creux (9, 10, 11, ou 12, 15, 16) lors de l'opération d'élargissement.
